# EUROPEAN PATENT SPECIFICATION

(11) **EP 0 301 764 B1**
(45) Date of publication and mention of the grant of the patent: **03.02.1993**
(21) Application number: 88306699.5
(22) Date of filing: 21.07.1988
(51) Int. Cl.: C09J 7/02

(54) **Adhesive tapes**
Klebebänder
Rubans adhésifs

(30) Priority: 29.07.1987 US 79183
(43) Date of publication of application: 01.02.1989
(73) Proprietor: THE KENDALL COMPANY, Mansfield, Massachusetts 02048 (US)
(72) Inventor: Mamish, Abboud L., Natick Massachusetts 01760 (US)
(74) Representative: Kearney, Kevin David Nicholas

(56) References cited:
- US-A- 4 303 724

## Description

In general, industrial adhesive tapes of the type known as duct tapes consist of a pliable film base, e.g. a polyolefin; a reinforcing fabric or scrim of cotton or a synthetic fibre, and an adhesive layer, e.g. a rubber-based adhesive coating.

Particularly efficaceous tapes of this general description are described and claimed in U.S.P. 4,303,724 issued to Sergeant and Thomas and assigned to The Kendall Company, assignee of the present invention. In accordance with their patent, the tear characteristics of such tapes having low-count reinforcing fabrics is greatly improved if the fabric comprises texturized or "false-twist" yarns in the filling direction. For instance, in the Specific Embodiment of the invention in Col.3, a gauze fabric was constructed using 20 yarns per inch of cotton in the warp (machine direction) and 12 false twist polyester yarns in the filling (cross) direction. When torn by hand, the tear properties of the tape imparted by the 20 x 12 fabric achieved an even tear previously attainable only by the use of appreciably higher count fabrics.

In the tape described in the specific embodiment, the film backing was a low density polyethylene (LDPE) 4 mils thick and the adhesive, a rubber-based adhesive, was 6 mils thick. These recited thicknesses for the film backing and adhesive coating are fairly illustrative of the thicknesses generally utilized for duct tapes.

While tapes of such thicknesses are of course quite satisfactory in terms of flexibility for their intended usage, e.g. as duct tapes, they lack the flexibility and conformability for wrapping smaller objects, particularly smaller objects of irregular shape.

Broadly speaking, the present invention is directed to industrial adhesive tapes which have a reinforcing fabric scrim for increased strength and dimensional stability but yet possess the conformability for use as a protective wrap for irregularly shaped articles. The scrim also facilitates even tearing in the cross direction. More specifically, it relates to an adhesive tape of this description which possesses the physical properties required for use as a harness wrap, for wire splices and other such industrial applications. For such industrial applications, the tape should be low cost, liquid impermeable, chemical resistant, flame retardant and evenly tearable in the cross direction (CD) as well as being conformable so as to adhere to the irregular contours of the article to be wrapped. This combination of requirements for the intended industrial applications in turn present several obstacles which must be overcome in order to provide the desired tape.

With respect to the reinforcing fabric, synthetic fibres such as polyesters as a class have the requisite flame retardancy and are also of acceptable low cost. However, they are hydrophobic, possess low surface energy and suffer the disadvantage of possessing poor anchorage to polymeric backings or other polymeric substrates. Consequently, when the thickness of the backing layer (e.g. polyethylene) is reduced in any effort to achieve the desired conformability which may be obtained by employing thinner films, the anchorage of the scrim to the backing drops. The resulting product accordingly lacks the structural stability needed for marketability. Cotton fibres, on the other hand, whilst they may provide acceptable anchorage to such a thinner backing, do not possess flame retardancy and consequently must be treated with a flame retardant and, moreover, are more expensive. For these reasons, cotton scrims cannot be employed in accordance with this invention and it is therefore necessary to employ synthetic fibre scrims in the preparation of the thin, conformable tapes envisioned by the present invention. This in turn requires some way to provide the acceptable anchorage which is not inherent in the use of synthetic fibre scrims with thin backings.

The task of the invention, simply stated, may be said to be to solve the aforementioned problems so as to provide an adhesive tape having the described properties and which may be used, for example, by the automotive industry for harness wraps.

According to the present invention, an adhesive tape characterized by having conformability rendering it adaptable for use as a harness wrap or for wrapping other small, irregularly shaped articles comprises: (1) a water-impermeable backing layer, e.g. low-density polyethylene (LDPE), of the order of 1-3 mils (0.0254 to 0.0762 mms) carrying, on one side thereof; (2) a flame retardant, evenly tearable synthetic fibre cloth or scrim substantially evenly tearable in the cross direction; (3) an outer, preferably flame retardant adhesive layer no thicker than 4 mils (0.1 mms), preferably a rubber-based adhesive; and (4) a tie coat layer 0.025 to 1.0 mil (0.0006 to 0.025 mms) thick, between the backing and the scrim which, when applied, at least partially fills the interstices between fibres of the cloth or scrim so as to provide surface contact with the underlying adhesive layer whereby to be in contact therewith, the tie coat providing a strong bond at the interface between the tie coat and the backing layer and at the interface between the tie coat and the cloth and at the interface between the tie coat and the adhesive layer. This provides a laminar product possessing the desired anchorage and structural stability, and further characterized as possessing structurable stability and integrity.

In the preferred embodiment of the invention, the tape is provided by coextruding the backing material and tie coat onto the scrim and thereafter applying the adhesive coating.

As previously stated, the present invention is directed to industrial adhesive tapes which have a reinforcing woven or nonwoven scrim and which possess a high degree of conformability making them suitable for use in wrapping irregularly shaped smaller articles, e.g. as a harness wrap, and which additionally are flame retardant and finger tearable in the cross direction. In order to have the requisite conformability, it is necessary that they be significantly thinner than a conventional industrial tape, e.g. a duct tape such as is described in the aforementioned patent. However scrims possessing flame retardancy making them suitable for use in the contemplated products have poor anchorage and consequently when the backing is made thinner, the resulting tape lacks commercially acceptable structural stability.

In accordance with the present invention, this problem is solved and the desired conformable tape is provided by utilizing a tie coat layer between the backing and the scrim which when applied partially fills the interstices between fibres of the scrim so as to provide surface contact with the underlying adhesive layer, the tie coat being of a material which provides a good bond at both the tie coat/backing interface and the tie coat/adhesive interface, thereby providing a laminar product possessing the desired anchorage and structural stability.

The novel duct tape of this invention will accordingly be characterized by being thin and conformable pressure-sensitive adhesive tapes having, in order, the following sequential layers or components:
(1) a water-impermeable flame-retardant backing layer 1-3 mils (0.0254 to 0.0762 mms) thick;
(2) a thin tie coat layer, preferably of the order of 0.025 to 1.0 mil e.g. 0.25 to 1.0 mil (0.000635 to 0.0254 e.g. 0.00635 to 0.0254 mms) thick, providing a good bond at the interface between the inner surfaces of the backing layer and the underlying scrim and adhesive layer;
(3) a lightweight synthetic fibre scrim which is flame retardant; and
(4) a flame-retardant pressure sensitive adhesive layer no thicker than about 4 mils (0.1 mms).

As examples of useful materials for the backing layer mention may be made of polyolefins such as polyethylene or polypropylene as well as polyolefin-containing blends, cellulose esters such as cellulose acetate, cellulose triacetate, etc., polyesters such as polyethylene terphthalate, and the like, polyethylene, and particularly a low density polyethylene (LDPE) being preferred. The backing layer will preferably also include a flame retardant e.g. a per se known flame retardant, e.g. a brominated aromatic amide such as ethylene bis-tetrabromophthalamide, or a chlorinated cycloaliphatic flame retardant, and may optionally contain other reagents performing specific desired functions, e.g. a colourant.

As mentioned, the tie coat is selected to provide a good bond with all of the substrates of the tape (including the adhesive layer, a portion of which will be present in the interstices of the scrim) so as to provide a laminar product providing the requisite stability against delamination or separation. Particularly useful materials of this description are polyolefin copolymers, particularly polyethylene copolymers such as ethylene methyl acrylate, ethylene vinyl acetate, ethylene acrylic acid. Other useful tie coat materials may readily suggest themselves to those skilled in the art in the light of this description.

The cloth or scrim employed in the practice of this invention preferably will comprise a synthetic fibre woven cloth, preferably polyester, in order to provide the requisite flame retardancy. However, it is not necessary for all the fibres to be synthetic and the preferred cloths will in fact contain up to 50% cotton in the warp in order to facilitate even finger tearability without sacrificing flame retardancy.

The preferred cloths are of the type described in the aforementioned U.S.P. 4,303,724 having polyester false-twist or texturized yarns in the filling direction. As previously stated, the warp yarn may and preferably will be a blend of cotton and polyester. For instance, a tape made in accordance with this invention employing a woven cloth of the foregoing description having a 75-25 polyester/cotton blend in the warp permitted satisfactory finger tearability in the cross direction. However, slightly improved tearability was obtained with a 50-50 polyester/cotton warp blend. In any case, the preferred fabrics will contain no more than twenty texturized (false twist) yarns per inch in the filling direction; and no more than 35 yarns per inch in the warp.

Accordingly, as used herein and in the appended claims the phrase "woven cloth comprising a synthetic fibre" or "woven cloth comprising polyester" denotes a woven cloth in which the yarn in this filling direction is a synthetic fibre or polyester (as the case may be) and the yarn in the warp is at least 50% synthetic fibre or polyester, i.e. may include as much as 50% other yarns, e.g. cotton.

The adhesive layer is preferably a pressure-sensitive adhesive layer and is preferably a rubber-based adhesive e.g. one of per se known description. A typical adhesive of this description may include a blend of natural rubber, tackifier and other reagents performing specific desired functions. The selection of the appropriate adhesive will at least in part be dependent upon the particular substrate to which it is to be adhered and in any event will be a matter of individual choice within the expected judgement of the skilled worker. Since the selection of the particular adhesive from those known in the art per se comprises no part of this invention, they need not be discussed in further detail.

The novel tapes of this invention can be assembled by individually producing and sequentially coating the component parts. For example, the backing, tie coat and scrim may be individually supplied to a calendering operation to provide a laminar structure of these three components. An adhesive layer may then be coated onto the cloth substrate by known coating techniques, e.g. calendering, casting, or extrusion.

However, the preferred method of manufacture in accordance with this invention utilizes per se known extrusion techniques wherein the backing and tie coat are coextruded onto the cloth web.

Regardless of the method employed, the tie coat melt when applied to the cloth substrate will permeate the interstices of the cloth whereby the cloth fibres may be said to be embedded, at least in part, in the tie coat layer. The subsequently applied adhesive layer will then in part be applied to the cloth fibres and in part be applied to the tie coat in the cloth interstices, thereby providing a strong laminar structure wherein the tie coat is bonded to the backing layer, the cloth and the adhesive material.

As mentioned, the preferred method of manufacture utilizes conventional coextrusion equipment for applying the backing and tie coat to the cloth.

In general, the coextrusion technique employed in the preferred manufacturing process of this invention utilizes two or more extruders, each delivering a single component polymer melt (backing and tie coat) to a combining feedblock which streamlines, combines and feeds the polymers to a single- or multimanifold coat hanger die which in turn feeds the two-layered film into a two roll/nip where the cloth web is fed simultaneously at that point to form the backing/tie coat/scrim laminate. Standard single screw extruders may be employed to melt and pump the individual layers into the coextrusion feedblock or die, as the case may be. High extrusion temperature profiles, e.g. 500-600°F (260-316°C), are advisable in this stage as well as the feedblock and die stages. These high temperatures, approaching the melting point of the polyester fibres of the cloth, will improve the bonding mechanism of the coextruded layers to the cloth.

Preferably, the feed pipes connecting the extruders to the feedblock should be kept to the shortest possible length to avoid long residence times which may result in polymer degradation as well as high pressure drops that could cause melt surges.

The dies employed in the extrusion coating applications typically consist of a single- or multi-manifold coat hanger design with a tear drop cross section and narrow land length. This design facilitates better control over the thin film thicknesses through gradual and continuous build up of head pressure.

The die may be positioned between a pair of cooling and polishing rolls where the molten films are extruded and laminated in the nip. For example, one may employ a small diameter (8-10 inch) (20-25 cms) rubber roll with a 75 shore-D hardness rotating against a large (18-30 inch) (46-76 cms) steel roll.

Since the coextrusion techniques, as described briefly above are per se well known, such details as barrel and die temperatures, screwspeeds and the like will be well understood and any further detailed description is not necessary for the practice of this invention.

The invention may be put into practice in various ways and a number of specific embodiments will be described to illustrate the invention with reference to the accompanying examples.

### EXAMPLE 1

A 20 x 14 polyester cloth was employed having 20 yarns per inch (8 per cm) of polyester yarns (understood to be 200 denier, 96 filament) and 12 false-twist yarns per inch (5 per cm) of filling, the false-twist yarns being a 75/25 blend of polyester yarns and 30's cotton yarns. The cloth scrim was approximately 4.25 mils (0.11 mms) thick. Onto this cloth was coextruded (in the manner previously described) a tie coat layer approximately 0.75 mil (0.019 mms) thick comprising 95% by weight of ethylene methyl acrylate and 5% by weight of black concentrate (for colour); and a backing layer approximately 1.5 mils (0.038 mms) thick comprising 65% by weight of LDPE, 30% by weight of a 60/40 polyethylene/ ethylene bis-tetrabromophthalamide flame-retardant blend and 5% by weight black concentrate. A 2 mil (0.051 mm) thick layer of B-46 adhesive (trade designation of The Kendall Company for a commercially available pressure-sensitive rubber-based adhesive) was then calendered over the cloth scrim to form the duct tape.

### EXAMPLE 2

Example 1 was repeated, utilizing a 30 x 16 cloth having a 30 polyester yarns per inch (12 per cm) in the warp and 16 false-twist yarns per inch (6 per cm) of fill comprising a 50-50 blend of cotton yarns and polyester yarns.

The tape of Example 1 utilizing the low thread count 20 x 14 scrim tended to tear in a somewhat ragged pattern. This uneven tear was eliminated with the 30 x 16 cloth of Example 2.

The novel tapes of this invention exhibit acceptable tensile strength and adhesion. For example, tapes prepared in accordance with the aforementioned illustrative examples had a tensile strength on the order of 29 lbs/in (25 Kgs/cm) of width; an adhesion to backing of 30 oz/in (1.6 Kgs/cm); and adhesion to steel of 60 oz/in (3.2 Kgs/cm).

Since one contemplated use of these tapes is as an automotive harness wrap, it is necessary that they possess chemical resistance to the kinds of environmental chemicals to which they would be subjected, as well as possessing the flexibility and conformability required to wrap such irregularly shaped articles.

The tapes described in the examples passed all chemical resistance tests to unleaded gasoline, motor oil, transmission oil, brake fluid, windshield washer and antifreeze, exhibiting no visual flagging.

Since certain changes may be made without departing from the scope of the invention herein described, it is intended that all matter contained in the foregoing description, including examples, shall be taken as illustrative and not in a limiting sense.

## Claims

1. An adhesive tape comprising a waterimpermeable backing layer 1 to 3 mils (0.025 to 0.076 mms) thick, carrying, on one side thereof, a flame retardant fibre cloth tearable in the cross direction, optionally containing up to 50% cotton in the yarn of the wrap of the cloth; an outer adhesive layer no thicker than 4 mils (0.1 mms); and a tie coat layer, 0.025 to 1.0 mil (0.0006 to 0.025 mms) thick, positioned between the said backing layer and the said cloth, the said tie coat at least partially filling interstices between the fibres of the said cloth, the said tie coat providing a bond at the interface between the tie coat and the backing layer, and at the interface between the tie coat and the cloth and at the interface between the tie coat and the adhesive layer.

2. An adhesive tape as claimed in any one of the preceding claims in which the said tie coat comprises ethylene methyl acrylate.

3. An adhesive tape as claimed in any one of the preceding claims in which the said woven cloth is characterized by having up to 20 false twist yarns per inch (8 per cm) in the filling direction and up to 35 yarns per inch (14 per cm) warp.

4. An adhesive tape as claimed in any one of the preceding claims in which the outer adhesive layer is flame retardant.

5. An adhesive tape as claimed in any one of the preceding claims in which the outer adhesive layer is a rubber-based adhesive.

6. An adhesive tape as claimed in any one of the preceding claims in which the said backing layer is of low density polyethylene.

7. An adhesive tape as claimed in any one of the preceding claims in which woven cloth is woven polyester cloth, optionally containing up to 50% cotton in the yarn of the warp of the cloth.

## Patentansprüche

1. Klebeband, das eine 0,025 bis 0,076 mm (1 bis 3 mils) dicke wasserundurchlässige Stützschicht, die auf einer ihrer Seiten einen flammenhemmenden, in Querrichtung reißbaren Faserstoff trägt, der gegebenenfalls bis zu 50 % Baumwolle in dem Garn der Kette des Stoffs enthält; eine äußere Klebeschicht, die nicht dicker als 0,1 mm (4 mils) ist; und eine 0,0006 bis 0,025 mm (0,025 bis 1,0 mils) dicke Verbindungsbeschichtungsschicht, die zwischen der Stützschicht und dem Stoff angeordnet ist, umfaßt, wobei die Verbindungsbeschichtung mindestens teilweise die Zwischenräume zwischen den Fasern des Stoffs füllt und wobei die Verbindungsbeschichtung eine Bindung an der Berührungsfläche zwischen der Verbindungsbeschichtung und der Stützschicht und an der Berührungsfläche zwischen der Verbindungsbeschichtung und dem Stoff sowie an der Berührungsfläche zwischen der Verbindungsbeschichtung und der Klebeschicht liefert.

2. Klebeband nach einem der vorhergehenden Ansprüche, bei dem die Verbindungsbeschichtung Ethylen-Methylacrylat umfaßt.

3. Klebeband nach einem der vorhergehenden Ansprüche, bei dem das Gewebe dadurch gekennzeichnet ist, daß es bis zu 20 Falschdrahtfäden pro 2,54 cm (8 pro cm) in Schußrichtung und bis zu 35 Fäden pro 2,54 cm (14 pro cm) Kette besitzt.

4. Klebeband nach einem der vorhergehenden Ansprüche, bei dem die äußere Klebeschicht flammenhemmend ist.

5. Klebeband nach einem der vorhergehenden Ansprüche, bei dem die äußere Klebeschicht ein auf Kautschuk basierendes Klebemittel ist.

6. Klebemittel nach einem der vorhergehenden Ansprüche, bei dem die Stützschicht aus Polyethylen mit niedriger Dichte (LDPE) besteht.

7. Klebeband nach einem der vorhergehenden Ansprüche, bei dem das Gewebe Polyestergewebe ist, das gegebenenfalls bis zu 50 % Baumwolle in dem Garn der Kette des Gewebes enthält.

## Revendications

1. Ruban adhésif comprenant une couche de support imperméable à l'eau, d'une épaisseur de 1 à 3 mils (0,025 à 0,076 mm), portant, sur l'un de ses côtés, un tissu en fibres ignifugeant, arrachable dans la direction transversale, contenant facultativement jusqu'à 50% de coton dans le fil de chaîne, une couche adhésive extérieure dont l'épaisseur ne dépasse pas 4 mils (0,1 mm) et une couche de revêtement de liage d'une épaisseur de 0,025 à 1,0 mil (0,0006 à 0,025 mm), mise en place entre la couche de support précitée et le tissu précité, le revêtement de liage en question remplissant au moins partiellement les interstices existant entre les fibres du tissu précité, ce revêtement de liage assurant une liaison à l'interface entre le revêtement de liage et la couche de support et à l'interface entre le revêtement de liage et le tissu et à l'interface entre le revêtement de liage et la couche adhésive.

2. Ruban adhésif suivant la revendication 1, caractérisé en ce que le revêtement de liage précité est constitué d'acrylate d'éthylène-méthyle.

3. Ruban adhésif suivant l'une quelconque des revendications précédentes, caractérisé en ce que ledit tissu tissé a pour caractéristique de comporter jusqu'à 20 fils à fausse torsion par pouce (8 par cm) dans la direction de remplissage et jusqu'à 35 fils par pouce (14 par cm) de chaîne.

4. Ruban adhésif suivant l'une quelconque des revendications précédentes, caractérisé en ce que la couche adhésive externe est ignifugeante.

5. Ruban adhésif suivant l'une quelconque des revendications précédentes, caractérisé en ce que la couche adhésive externe est formée d'un adhésif à base de caoutchouc.

6. Ruban adhésif suivant l'une quelconque des revendications précédentes, caractérisé en ce que la couche de support précitée est constituée de polyéthylène basse densité.

7. Ruban adhésif suivant l'une quelconque des revendications précédentes, caractérisé en ce que le tissu tissé est un tissu tissé de polyester, contenant facultativement jusqu'à 50% de coton dans le fil de chaîne du tissu.
